# EUROPÄISCHE PATENTSCHRIFT

(11) **EP 3 203 104 B1**
(45) Veröffentlichungstag und Bekanntmachung des Hinweises auf die Patenterteilung: **08.12.2021**
(21) Anmeldenummer: 17151583.6
(22) Anmeldetag: 16.01.2017
(51) Int. Cl.: F16F 1/371

(54) **HALTERUNG ZUR BEFESTIGUNG EINES AGGREGATS, INSBESONDERE EINER PUMPE, AN EINEM KRAFTFAHRZEUG**
MOUNT FOR ATTACHING AN ASSEMBLY, IN PARTICULAR A PUMP, ON A MOTOR VEHICLE
FIXATION DESTINÉE À FIXER UN AGRÉGAT, EN PARTICULIER UNE POMPE, SUR UN VÉHICULE AUTOMOBILE

(30) Priorität: 02.02.2016 DE 102016201560
(43) Veröffentlichungstag der Anmeldung: 09.08.2017
(73) Patentinhaber: Robert Bosch GmbH, 70442 Stuttgart (DE)
(72) Erfinder: Mahfoudh, Samir, 77815 Buehl (DE)

(56) Entgegenhaltungen:
- DE-A1- 2 526 061
- JP-A- S62 274 123

## Beschreibung

### Stand der Technik

Die Erfindung betrifft eine Halterung gemäß Patentanspruch 1.

Aus der DE 10 2011 085 558 A1 ist eine Halterung zum Befestigen eines Aggregats, insbesondere einer Pumpe an einem Kraftfahrzeug, mit einem ringförmigen Dämpfungselement, dessen Innenbereich zur Aufnahme des Aggregats vorgesehen ist und das außenseitig ein Befestigungselement aufweist, vom Zentrum des Dämpfungselements weg weisender Oberseite als Schnittstelle zum Kraftfahrzeug vorgesehen ist, bekannt. Im Dämpfungselement ist ein im Wesentlichen plattenförmiges Einlegeelement aus Metall angeordnet, das zur lokalen Versteifung des Dämpfungselements ausgelegt ist. Das Einlegeteil ist an zwei gegenüberliegenden Rändern mit jeweils einem in das Dämpfungselement hineinlaufenden Flügel ausgebildet. Die Flügel weisen eine konstante Dicke über ihre Länge auf. Dies führt zu einer unterschiedlichen Belastung des Einlegeteils, sodass die Gefahr eines mechanischen Bruchs am Übergang der Flügel zum plattenförmigen Einlegeteil besteht.

### Offenbarung der Erfindung

Es ist Aufgabe der Erfindung, eine verbesserte und langzeitstabile Halterung bereitzustellen.

Diese Aufgabe wird mittels einer Halterung gemäß Patentanspruch 1 gelöst. Vorteilhafte Ausführungsformen sind in den abhängigen Ansprüchen angegeben.

Es wurde erkannt, dass eine verbesserte Halterung für ein Aggregat, insbesondere einer Pumpe, an einem Kraftfahrzeug dadurch bereitgestellt werden kann, dass die Halterung ein Dämpfungselement und ein mit dem Dämpfungselement verbundenes Befestigungselement umfasst, wobei das Dämpfungselement mit dem Aggregat verbindbar ist, wobei das Befestigungselement wenigstens einen Schenkel und einen mit dem Schenkel verbundenen Anbindungsabschnitt umfasst, wobei der Schenkel ausgebildet ist, das Dämpfungselement zumindest abschnittsweise zu versteifen, wobei der Anbindungsabschnitt mit dem Kraftfahrzeug verbindbar ist, wobei mit zunehmendem Abstand zu dem Anbindungsabschnitt eine Dicke des Schenkels abnimmt.

Diese Ausgestaltung hat den Vorteil, dass ein Einschneiden des Befestigungselements in einen Werkstoff des Dämpfungselements und eine mögliche Beschädigung des Dämpfungselements durch das Befestigungselement vermieden wird.

In einer weiteren Ausführungsform ist die Dicke des Schenkels zumindest abschnittsweise derart gewählt, dass bei Einleitung einer Kraft in den Schenkel eine Biegespannung über zumindest einen Abschnitt des Schenkels konstant ist. Diese Ausgestaltung gewährleistet, dass bei Belastung des Befestigungselements, insbesondere bei Montage des Aggregats an der Halterung, eine lokale Überbelastung des Schenkels, die ggf. zu einem Bruch des Schenkels führen kann, vermieden wird. Dadurch ist die Halterung besonders langzeitstabil und kann zuverlässig das Aggregat am Kraftfahrzeug fixieren.

In einer weiteren Ausführungsform weist das Befestigungselement einen weiteren Schenkel auf, wobei der weitere Schenkel mit dem Anbindungsabschnitt verbunden ist, wobei der Anbindungsabschnitt zwischen dem Schenkel und dem weiteren Schenkel angeordnet ist. Mit zunehmendem Abstand des weiteren Schenkels zu dem Anbindungsabschnitt nimmt eine Dicke des weiteren Schenkels ab. Auf diese Weise kann beidseitig das Dämpfungselement durch die beiden Schenkel versteift werden und zuverlässig eine Durchbiegung des Dämpfungselements beim Tragen des Aggregats vermieden werden. Ferner werden hohe Momente auf den Anbindungsabschnitt durch die gleichzeitige Anordnung der Schenkel am Anbindungsabschnitt vermieden.

In einer weiteren Ausführungsform sind sind der Anbindungsabschnitt, der Schenkel und der weitere Schenkel einstückig und materialeinheitlich ausgebildet. Das Befestigungselement weist vorzugsweise einen Kunststoff, insbesondere ein Polyamid, als Werkstoff auf. Alternativ oder zusätzlich weist das Dämpfungselement einen weiteren Werkstoff auf, wobei der weitere Werkstoff vorzugsweise ein Elastomer aufweist. Alternativ oder zusätzlich weist der Werkstoff des Befestigungselements eine geringere Elastizität auf als der weitere Werkstoff des Dämpfungselements. Zusätzlich oder alternativ ist die Halterung mittels eines Spritzgussverfahrens, insbesondere eines Zwei-Komponenten-Spritzgussverfahrens hergestellt.

In einer weiteren Ausführungsform ist das Dämpfungselement ringförmig um eine Längsachse sich erstreckend ausgebildet. Der Schenkel weist einen ersten Abschnitt auf. Der erste Abschnitt verläuft auf einer Kreisbahn um die Längsachse.

In einer weiteren Ausführungsform umfasst der der Schenkel einen zweiten Abschnitt, wobei der zweite Abschnitt im Wesentlichen plan ausgebildet ist. Der zweite Abschnitt ist mit dem ersten Abschnitt und dem Anbindungsabschnitt verbunden und zwischen dem ersten Abschnitt und dem Anbindungsabschnitt angeordnet.

In einer weiteren Ausführungsform umfasst der Schenkel eine Aussparung. Die Aussparung ist vorzugsweise trapezförmig ausgebildet. Die Aussparung weist in Richtung eines freien Endes des Schenkels einen zunehmenden Querschnitt auf. Dadurch kann zusätzlich gewährleistet werden, dass das Biegemoment in dem Schenkel über den Schenkel hinweg zum freien Ende hin konstant ist. Ferner wird eine zuverlässige formschlüssige Verbindung des Dämpfungselements und des Befestigungselements sicher gewährleistet.

In einer weiteren Ausführungsform weist das Dämpfungselement eine Aufnahme mit einem Aufnahmeabschnitt auf. Der Aufnahmeabschnitt ist korrespondierend zu dem Schenkel ausgebildet, wobei der Aufnahmeabschnitt vollständig den Schenkel umgreift. Dadurch kann eine sichere Befestigung, insbesondere eine formschlüssige und/oder stoffschlüssige Verbindung zwischen dem Dämpfungselement und dem Schenkel sicher gewährleistet werden.

In einer weiteren Ausführungsform ist der Anbindungsabschnitt plan ausgebildet. Der Schenkel ist an einer ersten Seitenfläche mit dem Anbindungsabschnitt verbunden. An der ersten Seitenfläche umfasst das Befestigungselement eine Versteifungsrippe. Die Versteifungsrippe ist mit dem Anbindungsabschnitt verbunden und erstreckt sich vorzugsweise über wenigstens 80 Prozent einer maximalen Längserstreckung des Anbindungsabschnitts. Dadurch wird gewährleistet, dass ein Verzug des Anbindungsabschnitts, insbesondere beim Aushärten des Anbindungsabschnitts nach dem Spritzgießen, vermieden wird. Dadurch wird sichergestellt, dass der Anbindungsabschnitt plan ist.

In einer weiteren Ausführungsform ist die Versteifungsrippe mit dem zweiten Abschnitt des Schenkels verbunden. Dadurch wird ein besonders niedriger Materialverbrauch zur Herstellung des Befestigungselements mit der Versteifungsrippe sichergestellt. Zusätzlich oder alternativ ist die Versteifungsrippe in Querrichtung zwischen dem Schenkel und dem weiteren Schenkel angeordnet. Dadurch kann die Halterung besonders kompakt ausgebildet sein.

In einer weiteren Ausführungsform umfasst das Befestigungselement wenigstens einen Befestigungsbolzen. Der Befestigungsbolzen ist mit dem Anbindungsabschnitt verbunden. Das Dämpfungselement weist eine erste Anlagefläche und eine zur ersten Anlagefläche beabstandet angeordnete zweite Anlagefläche auf. Zwischen der ersten Anlagefläche und der zweiten Anlagefläche ist der Befestigungsbolzen angeordnet. Auf diese Weise wird eine zuverlässige, gleichmäßige Belastung der Anlagefläche sichergestellt.

In einer weiteren Ausführungsform weist die Halterung ein Eingriffselement auf. Der Befestigungsbolzen weist eine Nut auf. Der Befestigungsbolzen ist ausgebildet, einen Befestigungsabschnitt des Kraftfahrzeugs zu durchgreifen. Das Eingriffselement ist auf einer zum Dämpfungselement abgewandten Seite des Befestigungsabschnitts angeordnet und greift in die Nut ein, um den Befestigungsbolzen am Befestigungsabschnitt zu sichern. Ein Abstand zwischen der Nut und der Anlagefläche ist geringer als eine Dicke des Befestigungsabschnitts. Auf diese Weise wird sichergestellt, dass die Halterung kraftschlüssig mit dem Befestigungsabschnitt des Kraftfahrzeugs verbunden ist.

In einer weiteren Ausführungsform weist das Befestigungselement zumindest eine gebrochene Kante auf. Vorzugsweise ist die gebrochene Kante verrundet oder angefast. Auf diese Weise wird sichergestellt, dass das Befestigungselement nicht in den weiteren Werkstoff des Dämpfungselements einschneidet und so frühzeitig das Dämpfungselement einreißt.

Nachfolgend wird die Erfindung anhand von Figuren näher erläutert. Dabei zeigen:
- Figur 1: eine perspektivische Ansicht eines Systems;
- Figur 2: eine Explosionsdarstellung des in Figur 1 gezeigten Systems;
- Figur 3: eine Schnittansicht entlang einer in Figur 1 gezeigten Schnittebene A-A durch das in Figur 1 gezeigte System;
- Figur 4: eine Seitenansicht eines Befestigungselements der Halterung;
- Figur 5: eine perspektivische Ansicht des in Figur 4 gezeigten Befestigungselements;
- Figur 6: eine perspektivische Darstellung eines Dämpfungselements des in den Figuren 1 und 2 gezeigten Systems;
- Figur 7: eine perspektivische Ansicht einer Weiterbildung des in den Figuren 4 und 5 gezeigten Befestigungselements; und
- Figur 8: eine perspektivische Ansicht einer weiteren Weiterbildung des in Figur 7 gezeigten Befestigungselements.

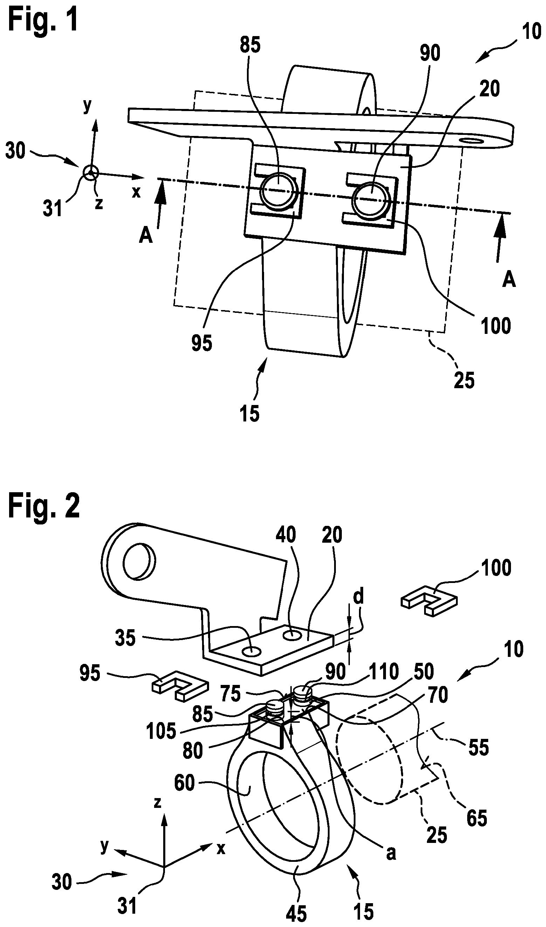

Figur 1 zeigt eine perspektivische Darstellung eines Systems 10. In den folgenden Figuren soll auf ein Koordinatensystem 30 Bezug genommen werden. Das Koordinatensystem 30 ist als Rechtssystem ausgebildet. Das Koordinatensystem 30 weist eine x-Achse (Längsrichtung), eine Y-Achse (Querrichtung) und eine z-Achse (Höhe) auf. Die x-Achse, die Y-Achse und die z-Achse schneiden sich in einem Ursprung 31. Das Koordinatensystem 30 kann selbstverständlich auch anders ausgebildet sein. Das Koordinatensystem 30 dient im Folgenden dazu, die Ausgestaltung des Systems 10 in den nachfolgenden Figuren besonders anschaulich zu erläutern.

Das System 10 umfasst eine Halterung 15, einen Befestigungsabschnitt 20 und ein Aggregat 25. Der Befestigungsabschnitt 20 kann beispielsweise ein Teil eines Kraftfahrzeugs, insbesondere eines Verbrennungsmotors oder einer Karosserie, sein. Das Aggregat 25 kann beispielsweise als Pumpe ausgebildet sein. Das Aggregat 25 ist beispielhaft abschnittsweise zylinderförmig ausgebildet und ist mittels der Halterung 15 mit dem Befestigungsabschnitt 20 verbunden.

Figur 2 zeigt eine Explosionsdarstellung des in Figur 1 gezeigten Systems 10.

Der Befestigungsabschnitt 20 ist beispielhaft plan ausgebildet. Der Befestigungsabschnitt 20 erstreckt sich beispielsweise in einer xy-Ebene und weist eine beispielhaft eine erste Durchgangsöffnung 35 und eine zweite Durchgangsöffnung 40 auf. Die erste Durchgangsöffnung 35 ist in Längsrichtung beabstandet zu der zweiten Durchgangsöffnung 40 angeordnet.

Die Halterung 15 umfasst ein Dämpfungselement 45 und ein Befestigungselement 50. Das Dämpfungselement 45 verläuft abschnittsweise ringförmig um eine Längsachse 55, die vorzugsweise parallel zur x-Achse ausgerichtet ist, in der Ausführungsform beispielhaft auf der x-Achse angeordnet ist. Dabei weist das Dämpfungselement 45 eine erste Aufnahme 60 auf. Die erste Aufnahme 60 ist zylinderförmig ausgebildet und dient dazu, eine äußere Umfangsfläche 65 des Aggregats 25 zu umgreifen.

Das Dämpfungselement 45 weist ferner eine erste Anlagefläche 70 und vorzugsweise eine zweite Anlagefläche 75 auf. Die erste Anlagefläche 70 und die zweite Anlagefläche 75 sind auf einer zum Befestigungsabschnitt 20 zugewandten Seite des Dämpfungselements 45 angeordnet und in Querrichtung beispielhaft beabstandet zueinander angeordnet. Mit der ersten und der zweiten Anlagefläche 70, 75 liegt das Dämpfungselement 45 an dem Befestigungsabschnitt 20 an. Der Befestigungsabschnitt 20 weist in z-Richtung eine Befestigungsabschnittsdicke d auf.

Zwischen der ersten Anlagefläche 70 und der zweiten Anlagefläche 75 weist das Dämpfungselement 45 eine Vertiefung 80 auf. Die Vertiefung 80 ist gegenüber der ersten und/oder zweiten Anlagefläche 70, 75 in z-Richtung versetzt auf einer zum Befestigungsabschnitt 20 abgewandte Seite angeordnet. Die Vertiefung 80 ist beispielhaft nutförmig ausgebildet.

Das Befestigungselement 50 weist beispielhaft einen ersten Befestigungsbolzen 85 und einen zweiten Befestigungsbolzen 90 auf. Der erste Befestigungsbolzen 85 ist der ersten Durchgangsöffnung 35 zugeordnet. Der zweite Befestigungsbolzen 90 ist der zweiten Durchgangsöffnung 40 zugeordnet. Der Befestigungsbolzen 85, 90 weist jeweils eine Nut 105, 110 auf. Die Nut 105, 110 weist in nicht montiertem Zustand des Systems 10 in z-Richtung einen Nutabstand a zur der Anlagefläche 70, 75 auf.

Die Halterung 15 umfasst ferner ein erstes Eingriffselement 95 und beispielhaft ein zweites Eingriffselement 100. Das erste Eingriffselement 95 und das zweite Eingriffselement 100 sind in der Ausführungsform beispielhaft identisch ausgebildet. Das Eingriffselement 95, 100 ist beispielhaft U-förmig ausgebildet. Das Eingriffselement 95, 100 weist vorzugsweise Metall als Werkstoff auf.

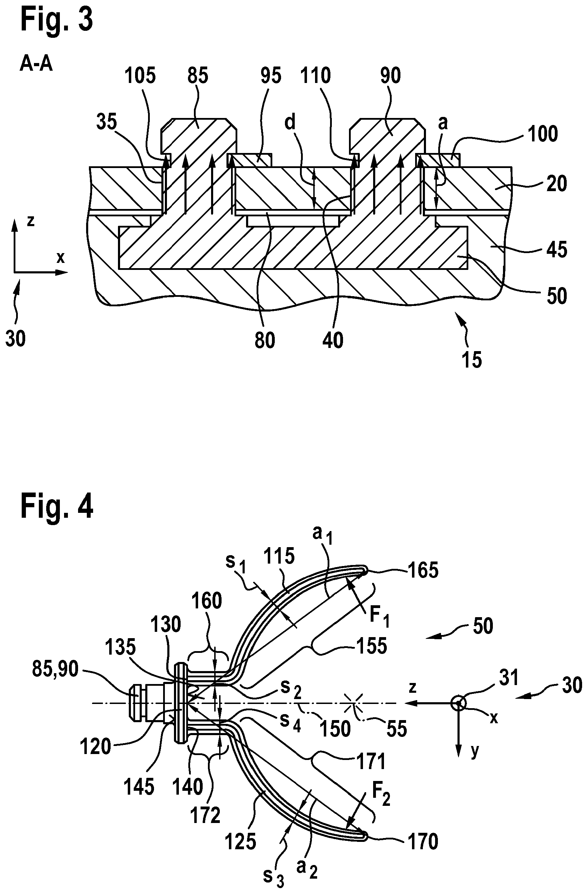

Figur 3 zeigt einen Querschnitt entlang einer in Figur 1 gezeigten Schnittebene A-A durch das System 10. Das Eingriffselement 95, 100 ist auf einer zum Dämpfungselement 45 abgewandten Seite des Befestigungsabschnitts 20 angeordnet. Der erste Befestigungsbolzen 85 ist durch die erste Durchgangsöffnung 35 und der zweite Befestigungsbolzen 90 ist durch die zweite Durchgangsöffnung 40 geführt. Das erste Eingriffselement 95 greift in die erste Nut 105 ein und verbindet formschlüssig den ersten Befestigungsbolzen 85 mit dem Befestigungsabschnitt 20. Das zweite Eingriffselement 100 greift auf einer dem Dämpfungselement 45 abgewandten Seite des Befestigungsabschnitts 20 in die zweite Nut 110 ein und verbindet formschlüssig den zweiten Befestigungsbolzen 90 mit dem Befestigungsabschnitt 20.

Durch die U-förmige Ausgestaltung des Eingriffselements 95, 100 kann das Eingriffselement 95, 100 in Längsrichtung auf einfache Weise in die Nut 105, 110 aufgeschoben werden, sodass besonders schnell und kostengünstig die Halterung 15 mit dem Befestigungsabschnitt 20 verbunden werden kann.

Besonders von Vorteil ist, wenn in unmontiertem Zustand der Halterung 15 der Nutabstand a kleiner ist als die Befestigungsabschnittsdicke d des Befestigungsabschnitts 20. Um das Eingriffselement 95, 100 zu montieren wird das Dämpfungselement 45 an der Anlagefläche 70, 75 gestaucht und vorgespannt. Dann wird das Eingriffselement 95, 100 in die Nut 105, 110 eingeschoben. Die Vorspannung wird in montiertem Zustand durch die Wahl dass der Nutabstand a kleiner ist als die Befestigungsabschnittsdicke d zumindest teilweise aufrecht erhalten, sodass die Halterung 15 zusätzlich kraftschlüssig mit dem Befestigungsabschnitt 20 verbunden ist. Dadurch kann Toleranzausgleich zwischen Halterung 15 und Befestigungsabschnitt 20 bereitgestellt werden. Ferner wird das Eingriffselement 95, 100 in der Nut 105, 110 in z-Richtung belastet, sodass ein unbeabsichtigtes Lösen des Eingriffselement 95, 100 aus der Nut 105, 110 verhindert wird.

Figur 4 zeigt eine Seitenansicht des Befestigungselements 50. Das Befestigungselement 50 umfasst einen ersten Schenkel 115, einen Anbindungsabschnitt 120 und einen zweiten Schenkel 125. Der erste Schenkel 115 ist mit seinem festen Ende 130 mit einer ersten Seitenfläche 135 des Anbindungsabschnitts 120 verbunden. Der zweite Schenkel 125 ist mit seinem festen Ende 140 ebenso mit der ersten Seitenfläche 135 des Anbindungsabschnitts 120 mit dem Anbindungsabschnitt 120 verbunden. Dabei ist das feste Ende 130 des ersten Schenkels 115 in Querrichtung (y-Achse) versetzt zu dem festen Ende 140 des zweiten Schenkels 125 angeordnet. In Längsrichtung sind die Schenkel 115, 125 auf gleicher Höhe angeordnet. Auf einer zur ersten Seitenfläche 135 gegenüberliegenden zweiten Seitenfläche 145 ist der Befestigungsbolzen 85, 90 mit dem Anbindungsabschnitt 120 verbunden. Der Anbindungsabschnitt 120 ist plan ausgebildet und erstreckt sich beispielhaft in einer xy-Ebene.

Der erste Schenkel 115 und der zweite Schenkel 125 sind in der Ausführungsform beispielhaft zu einer Symmetrieebene 150 achsensymmetrisch ausgebildet. Die Symmetrieebene 150 verläuft dabei in einer xy-Ebene. Selbstverständlich kann der erste Schenkel 115 auch andersartig zum zweiten Schenkel 12 ausgebildet sein.

Der erste Schenkel 115 weist einen ersten Abschnitt 155 und einen zweiten Abschnitt 160 auf. Der zweite Abschnitt 160 grenzt dabei an das feste Ende 130 des ersten Schenkels 115 an. Der zweite Abschnitt 160 ist dabei zwischen dem ersten Abschnitt 155 und dem Anbindungsabschnitt 120 angeordnet. Der zweite Abschnitt 160 ist plan ausgebildet und erstreckt sich beispielhaft in einer xz-Ebene. Der erste Abschnitt 155 verläuft beispielhaft auf einer Kreisbahn um die Längsachse 55. Auch sind andere geometrische Ausgestaltungen des ersten Abschnitts 155 denkbar. Der erste Abschnitt 155 schließt in der Ausführungsform beispielhaft etwa ein Viertelkreissegment ein, sodass ein freies Ende 165 des ersten Schenkels 115 etwa auf Höhe der Längsachse 55 endet. Im ersten Abschnitt 155 nimmt eine erste Dicke s₁ des ersten Schenkels 115 im ersten Abschnitt 155 mit zunehmendem ersten Abstand a₁ vom Anbindungsabschnitt 120 hin zum freien Ende 165 des ersten Schenkels 115 ab. Die erste Dicke s₁ ist im ersten Abschnitt 155 derart gewählt, dass bei Wirken einer in einer zumindest teilweise in einer yz-Ebene wirkenden ersten Kraft F₁ auf den ersten Schenkel 115, z.B. bei einer Montage des Aggregats 25 an der Halterung 15, eine erste Biegespannung S₁ im Wesentlichen konstant über die Erstreckung des ersten Abschnitts 155 ist.

Im zweiten Abschnitt 160 ist eine zweite Dicke s₂ des zweiten Abschnitts 160 beispielsweise konstant. Auch kann im zweiten Abschnitt 160 mit zunehmendem ersten Abstand a₁ zum Anbindungsabschnitt 120 hin zum ersten Abschnitt 155 des ersten Schenkels 115 die zweite Dicke s₂ des ersten Schenkels 115 abnehmen. Dadurch kann auch im zweiten Abschnitt 160 die erste Biegespannung S₁ bei Belastung konstant gehalten werden.

Der zweite Schenkel 125 weist einen dritten Abschnitt 171 und einen vierten Abschnitt 172 auf. Der vierte Abschnitt 160 grenzt dabei an das feste Ende 140 des zweiten Schenkels 125 an. Der vierte Abschnitt 172 ist dabei zwischen dem dritten Abschnitt 171 und dem Anbindungsabschnitt 120 angeordnet. Der vierte Abschnitt 172 ist plan ausgebildet und erstreckt sich in Querrichtung versetzt parallel zu dem zweiten Abschnitt 160. Der dritte Abschnitt 171 verläuft beispielhaft auf einer Kreisbahn um die Längsachse 55. Auch sind andere geometrische Ausgestaltungen des dritten Abschnitts 171 denkbar. Der dritte Abschnitt 171 schließt in der Ausführungsform beispielhaft etwa ein Viertelkreissegment ein, wobei ein freies Ende 170 des zweiten Schenkels 125 etwa auf Höhe der Längsachse 55 endet. Dadurch umgreifen die Schenkel 115, 125 zusammen etwa ein Winkelsegment von 180°. Der zweite und vierte Abschnitt 160, 172 sind in z-Richtung gleich breit ausgebildet.

Im dritten Abschnitt 171 nimmt eine dritte Dicke s₃ des zweiten Schenkels 125 im dritten Abschnitt 171 mit zunehmendem zweiten Abstand a₂ vom Anbindungsabschnitt 120 hin zum freien Ende 170 des zweiten Schenkels 125 ab. Die dritte Dicke s₁ ist im dritten Abschnitt 171 derart gewählt, dass bei Wirken einer in einer zumindest teilweise in einer yz-Ebene wirkenden zweiten Kraft F₂ auf den zweiten Schenkel 125, z.B. bei einer Montage des Aggregats 25 an der Halterung 15, eine zweite Biegespannung S₂ im Wesentlichen konstant über die Erstreckung des dritten Abschnitts 171 ist.

Im vierten Abschnitt 172 ist eine vierte Dicke s₄ des vierten Abschnitts 172 beispielsweise konstant. Auch kann im vierten Abschnitt 172 mit zunehmendem zweiten Abstand a₂ zum Anbindungsabschnitt 120 hin zum dritten Abschnitt 171 des zweiten Schenkels 125 die vierte Dicke s₄ des zweiten Schenkels 125 abnehmen.

Die oben beschriebene Ausgestaltung des Schenkels 115, 125 hat den Vorteil, dass eine aus der Kraft F₁, F₂ resultierende Dehnung des Schenkels 115, 125 und damit eine resultierende mechanische Spannung des Befestigungselements 50 auf den gesamten Schenkel 115, 125 verteilt ist und nicht lokal auf den Schenkel 115, 125 wirkt. Somit wirkt die gesamte Struktur des Befestigungselements 50 tragend und eine Sollbruchstelle wird am Befestigungselement 50 vermieden.

Dies hat den Vorteil, dass das Aggregat 25 zuverlässig am Befestigungsabschnitt 20 befestigt ist und eine Auslenkung des Aggregats 25, beispielsweise während einer Montage, beispielsweise insbesondere einer Montage von Schläuchen, insbesondere beispielsweise von Kühlschläuchen oder im Betrieb des Aggregats 25, stark begrenzt ist.

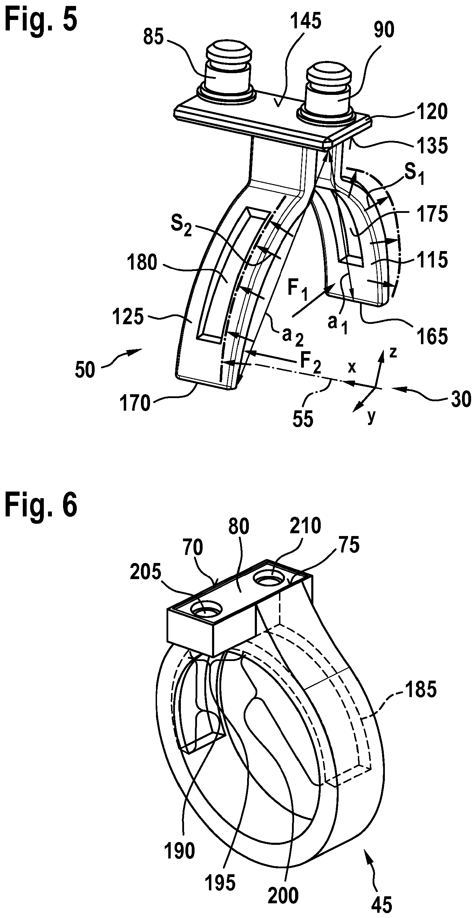

Figur 5 zeigt eine perspektivische Ansicht des in Figur 4 gezeigten Befestigungselements 50. Der erste Schenkel 115 weist eine erste Aussparung 175 und der zweite Schenkel 125 weist eine zweite Aussparung 180 auf. Die Aussparung 175, 180 ist beispielhaft trapezförmig ausgebildet und beispielhaft als Durchgangsöffnung in dem Schenkel 115, 125 ausgebildet. Auch wäre denkbar, dass die Aussparung als Einbuchtung in dem Schenkel 115, 125 ausgebildet ist und/oder nur einer der beiden Schenkel 115, 125 die Aussparung 175, 180 aufweist. Auch kann auf die Aussparung 175, 180 verzichtet werden. Die Aussparung 175, 180 weist in Richtung des freien Endes 165, 170 des Schenkels 115, 125 einen zunehmenden Querschnitt auf. Auch kann die Aussparung 175, 180 geometrisch andersartig ausgebildet sein. In der Ausführungsform ist die erste Aussparung 175 und der erste Abschnitt 155 des ersten Schenkels 115 derart aufeinander abgestimmt, dass bei Einleitung der ersten Kraft F₁ in den ersten Abschnitt 155 die erste Biegespannung S₁ über die Erstreckung des ersten Abschnitts 155 konstant ist. Ebenso ist vorteilhafterweise die zweite Aussparung 180 und der dritte Abschnitt 171 des zweiten Schenkels 125 derart aufeinander abgestimmt, dass bei Einleitung der zweiten Kraft F₂ in den dritten Abschnitt 171 die zweite Biegespannung S₂ über die Erstreckung des dritten Abschnitts 171 konstant ist.

In der Ausführungsform sind der Anbindungsabschnitt 120, der erste Schenkel 115, der zweite Schenkel 125 und der Befestigungsbolzen 85, 90 einstückig und materialeinheitlich ausgebildet. Besonders von Vorteil ist hierbei, wenn das Befestigungselement 50 einen Kunststoff, insbesondere einen Polyamid, als Werkstoff aufweist. Ferner ist von Vorteil, wenn das Befestigungselement 50 mittels eines Spritzgussverfahrens hergestellt wird.

Des Weiteren sind in der Ausführungsform ist wenigstens eine Kante 173 des Befestigungselements 50, vorzugsweise alle Kanten 173 gebrochen. Die gebrochene Kante 173 kann dabei verrundet oder angefast sein. Diese Ausgestaltung hat den Vorteil, dass das Befestigungselement 50 aus einer Spritzgussform besonders leicht entformt werden kann.

Figur 6 zeigt eine perspektivische Darstellung des Dämpfungselements 45. Das Dämpfungselement 45 ist im Wesentlichen ringförmig ausgebildet und weist eine zweite Aufnahme 185 auf. Die zweite Aufnahme 185 weist einen ersten Aufnahmeabschnitt 190, einen zweiten Aufnahmeabschnitt 195 und einen dritten Aufnahmeabschnitt 200 auf. Ferner umfasst die zweite Aufnahme 185 eine erste Austrittsöffnung 205 und eine zweite Austrittsöffnung 210. Die erste Austrittsöffnung 205 und die zweite Austrittsöffnung 210 sind angrenzend an die Vertiefung 80 zwischen den beiden Anlageflächen 70, 75 angeordnet. Die Austrittsöffnung 205, 210 ist mit dem zweiten Aufnahmeabschnitt 195 verbunden.

In den ersten Aufnahmeabschnitt 190 greift der erste Schenkel 115 ein. Dabei wird der erste Schenkel 115 in dem ersten Aufnahmeabschnitt 190 vollständig von dem ersten Aufnahmeabschnitt 190 umgriffen, sodass der erste Schenkel 115 vollständig durch einen weiteren Werkstoff des Dämpfungselements 45 überdeckt ist. In den zweiten Aufnahmeabschnitt 195 greift der der Anbindungsabschnitt 120 ein. Dabei umgreift der zweite Aufnahmeabschnitt 195 in der Ausführungsform vollständig den Anbindungsabschnitt 120. Durch die erste Austrittsöffnung 205 ist der erste Befestigungsbolzen 85 und durch die zweite Austrittsöffnung 210 der zweite Befestigungsbolzen 90 geführt. In den dritten Aufnahmeabschnitt 200 greift der zweite Schenkel 125 ein, wobei der dritte Aufnahmeabschnitt 200 vollständig den zweiten Schenkel 125 umgreift, sodass der zweite Schenkel 125 vollständig durch den weiteren Werkstoff des Dämpfungselements 45 umgeben ist.

Von besonderem Vorteil ist hierbei, wenn ein Elastomer, vorzugsweise insbesondere einen Ethylen-Propylen-Dien-Kautschuk (EPDM) aufweist. Von besonderem Vorteil ist, wenn die Halterung 15 mittels eines Zwei-Komponenten-Spritzgussverfahrens hergestellt wird. Auch ist denkbar, dass das Befestigungselement 50 in einem ersten Spritzgussverfahren hergestellt wird und in einem zweiten Spritzgussverfahren als Einleger dient, bei dem das Befestigungselement 50 mit dem weiteren Werkstoff des Dämpfungselements 45 umspritzt wird. Dadurch kann die Halterung 15 besonders kostengünstig und einfach hergestellt werden. Insbesondere kann dabei auf einen zeitintensiven Einsatz von einem Primer am Befestigungselement 50 zur stoffschlüssigen Verbindung des Befestigungselements 50 mit dem Dämpfungselement 45 verzichtet werden.

In der Ausführungsform weist der Werkstoff des Befestigungselements 50 eine geringere Elastizität auf als der weitere Werkstoff des Dämpfungselements 45. Dadurch wird sichergestellt, dass Schwingungen zwischen dem Aggregat 25 und dem Befestigungsabschnitt 20 wirksam durch das Dämpfungselement 45 gedämpft werden und nicht über die Halterung 15 zwischen dem Befestigungsabschnitt 20 und dem Aggregat 25 übertragen werden. Auf diese Weise wird sichergestellt, dass das Aggregat 25 schwingungsarm gelagert wird und zum anderen vom Aggregat 25 erzeugte Schwingungen nicht an den Befestigungsabschnitt 20 übertragen werden.

Durch die gebrochene Kante 173 am Befestigungselement 50 wird ferner gewährleistet, dass das Befestigungselement 50 nicht den Werkstoff des Dämpfungselements 45 lokal überbeansprucht und der weitere Werkstoff des Dämpfungselements 45 dadurch einreißt.

Durch die Aussparung 175, 180 wird sichergestellt, dass die bei der Montage des Aggregats 25 am Halter in die Halterung 15 eingebrachte Dehnung des Befestigungselements 50 nicht lokal wirkt, sondern die Dehnung auf den gesamten Schenkel 115, 125 verteilt wird. Dies erhöht die Belastbarkeit des Befestigungselements 50 und sorgt für eine fehlerfreie Funktion der Halterung 15. Ferner bietet die Aussparung 175, 180 eine formschlüssige Verbindung mit dem Dämpfungselement 45 und reduziert somit eine Scherspannung an gemeinsamen Oberflächen zwischen Schenkel 115, 125 und Dämpfungselement 45.

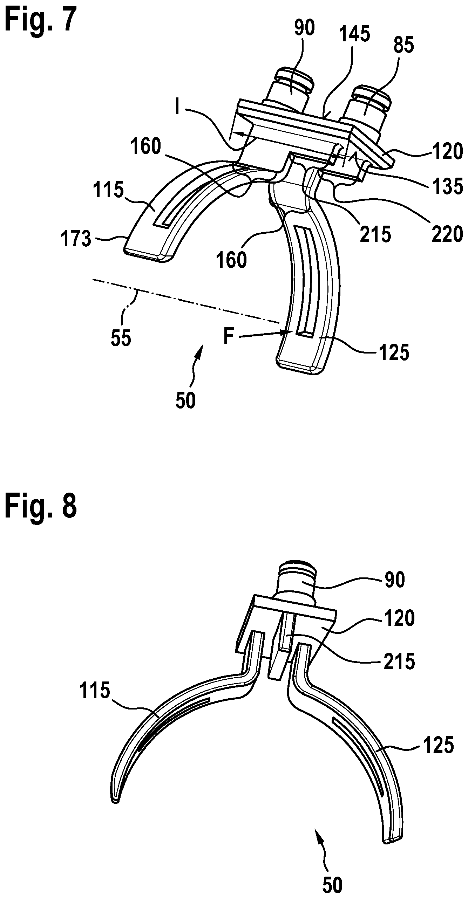

Figur 7 zeigt eine perspektivische Ansicht einer Weiterbildung des in den Figuren 4 und 5 gezeigten Befestigungselements 50. Das Befestigungselement 50 umfasst beispielhaft eine erste Versteifungsrippe 215 und beispielsweise eine zweite Versteifungsrippe 220. Die Versteifungsrippe 215, 220 ist an der ersten Seitenfläche 135 des Anbindungsabschnitts 120 angeordnet. Die Versteifungsrippe 215, 220 erstreckt sich in Längsrichtung (x-Achse) beispielhaft parallel zur Längsachse 55. In der Ausführungsform ist die erste Versteifungsrippe 215 mit dem zweiten Abschnitt 160 des ersten Schenkels 115 verbunden. Ferner ist die zweite Versteifungsrippe 220 in Längsrichtung mit dem zweiten Abschnitt 160 des zweiten Schenkels 125 verbunden. Besonders von Vorteil ist hierbei, wenn sich die Versteifungsrippe 215, 220 über wenigstens 80 Prozent einer maximalen Längserstreckung I des Anbindungsabschnitts 120 erstreckt. Diese Ausgestaltung hat den Vorteil, dass ein Widerstandsmoment des Anbindungsabschnitts 120 erhöht ist und sodass auch bei mechanischer Belastung der Anbindungsabschnitt 120 verzugsfrei und plan bleibt. Dadurch wird verhindert, dass ein Verbiegen des Anbindungsabschnitts 120 aus der Ebene heraus beispielsweise auf Grund thermischer Spannungen beim Spritzgießen des Befestigungselements 50 vermieden wird. Somit ist sichergestellt, dass der erste Befestigungsbolzen 85 parallel zum zweiten Befestigungsbolzen 90 in z-Richtung ausgerichtet ist.
Dadurch kann sicher gewährleistet werden, dass der Befestigungsbolzen 85, 90 durch die Durchgangsöffnung 35, 40 bei der Montage der Halterung 15 am Befestigungsabschnitt 20 geführt werden kann. Ferner wird vermieden, dass der Befestigungsbolzen 85, 90 im Betriebszustand einseitig belastet wird und das Befestigungselement 50 frühzeitig mechanisch versagt.

Figur 8 zeigt eine perspektivische Ansicht einer Weiterbildung des in Figur 7 erläuterten Befestigungselements 50. In der Ausführungsform ist nur eine Versteifungsrippe 215 vorgesehen. Die Versteifungsrippe 215 ist in Querrichtung zwischen dem ersten Schenkel 115 und dem zweiten Schenkel 125 angeordnet und erstreckt sich im Wesentlichen über die gesamte Längserstreckung des Anbindungsabschnitts 120.

Es wird darauf hingewiesen dass die in den Figuren 1 bis 8 gezeigten Merkmale miteinander kombiniert werden können und/oder auf einzelne Merkmale verzichtet werden kann.

## Patentansprüche

1. Halterung (15) zum Befestigen eines Aggregats (25), insbesondere einer Pumpe, an einem Kraftfahrzeug (20)
- mit einem Dämpfungselement (45) und einem mit dem Dämpfungselement (45) verbundenen Befestigungselement (50),
- wobei das Dämpfungselement (45) mit dem Aggregat (25) verbindbar ist,
- wobei das Befestigungselement (50) wenigstens einen Schenkel (115, 125) und einen mit dem Schenkel (115, 125) verbundenen Anbindungsabschnitt (120) umfasst,
- wobei der Schenkel (115, 125) ausgebildet ist, das Dämpfungselement (45) zumindest abschnittsweise zu versteifen,
- wobei der Anbindungsabschnitt (120) mit dem Kraftfahrzeug (20) verbindbar ist,
- **dadurch gekennzeichnet, dass** mit zunehmendem Abstand (a₁, a₂) zu dem Anbindungsabschnitt (120) eine Dicke (s₁, s₂, s₃, s₄) des Schenkels (115, 125) abnimmt.

2. Halterung (15) nach Anspruch 1,
- wobei die Dicke (s₁, s₂, s₃, s₄) des Schenkels (115, 125) zumindest abschnittsweise derart gewählt ist, dass bei Einleitung einer Kraft (F₁, F₂) in den Schenkel (115, 125) eine Biegespannung (S₁, S₂) über zumindest einen Abschnitt (155, 171) des Schenkels (115, 125) konstant ist.

3. Halterung (15) nach Anspruch 1 oder 2,
- wobei das Befestigungselement (50) einen weiteren Schenkel (125) aufweist,
- wobei der weitere Schenkel (125) mit dem Anbindungsabschnitt (120) verbunden ist,
- wobei der Anbindungsabschnitt (120) zwischen dem Schenkel (115) und dem weiteren Schenkel (125) angeordnet ist,
- wobei mit zunehmendem Abstand des weiteren Schenkels (125) zu dem Anbindungsabschnitt (120) eine Dicke (s₃, s₄) des weiteren Schenkels (125) abnimmt.

4. Halterung (15) nach Anspruch 3,
- wobei der Anbindungsabschnitt (120), der Schenkel (115) und der weitere Schenkel (125) einstückig und materialeinheitlich ausgebildet ist sind, wobei das Befestigungselement (50) wenigstens Kunststoff, insbesondere ein Polymanid, als Werkstoff aufweist,
- und/oder
- wobei vorzugsweise das Dämpfungselement (45) einen weiteren Werkstoff aufweist,
- wobei der weitere Werkstoff vorzugsweise ein Elastomer aufweist,
- und/oder
- wobei der Werkstoff des Befestigungselements (50) eine geringere Elastizität aufweist als der weitere Werkstoff des Dämpfungselements (45)
- und/oder wobei die Halterung (15) mittels eines Spritzgussverfahrens, insbesondere eines Zwei-Komponenten-Spritzgussverfahrens, hergestellt ist.

5. Halterung (15) nach Anspruch einem der vorhergehenden Ansprüche,
- wobei das Dämpfungselement (45) ringförmig um eine Längsachse (55) sich erstreckt,
- wobei der Schenkel (115, 125) einen ersten Abschnitt (155, 171) aufweist,
- wobei der erste Abschnitt (155, 171) auf einer Kreisbahn um die Längsachse (55) verläuft.

6. Halterung (15) nach Anspruch 5,
- wobei der Schenkel (115, 125) einen zweiten Abschnitt (160, 172) umfasst,
- wobei der zweite Abschnitt (160, 172) im Wesentlichen plan ausgebildet ist,
- wobei der zweite Abschnitt (160, 172) mit dem ersten Abschnitt (155, 171) und dem Anbindungsabschnitt (120) verbunden und zwischen dem ersten Abschnitt (155, 171) und dem Anbindungsabschnitt (120) angeordnet ist.

7. Halterung (15) nach einem der vorhergehenden Ansprüche,
- wobei der Schenkel (115, 125) eine Aussparung (175, 180) aufweist,
- wobei die Aussparung (175, 180) vorzugsweise trapezförmig ausgebildet ist,
- wobei die Aussparung (175, 180) in Richtung eines freien Ende (165, 170) des Schenkels (115, 125) einen zunehmenden Querschnitt aufweist.

8. Halterung (15)nach einem der vorhergehenden Ansprüche,
- wobei das Dämpfungselement (45) eine Aufnahme (60, 185) mit einem Aufnahmeabschnitt (190, 195, 200) umfasst,
- wobei der Aufnahmeabschnitt (190, 195, 200) korrespondierend zu dem Schenkel (115, 125) ausgebildet ist,
- wobei der Aufnahmeabschnitt (190, 195, 200) vollständig den Schenkel (115, 125) umgreift.

9. Halterung (15) nach einem der vorhergehenden Ansprüche,
- wobei der Anbindungsabschnitt (120) plan ausgebildet ist,
- wobei der Schenkel (115, 125) an einer ersten Seitenfläche (135) mit dem Anbindungsabschnitt (120) verbunden ist,
- wobei an der ersten Seitenfläche (135) das Befestigungselement (50) eine Versteifungsrippe (215, 220) umfasst,
- wobei die Versteifungsrippe (215, 220) mit dem Anbindungsabschnitt (120) verbunden ist und sich vorzugsweise über wenigstens 80 Prozent einer maximalen Längserstreckung des Anbindungsabschnitts (120) erstreckt.

10. Halterung (15) nach Anspruch 9,
- wobei die Versteifungsrippe (215, 220) mit dem zweiten Abschnitt (160, 172) des Schenkels (115, 125) verbunden ist,
- und/oder
- wobei die Versteifungsrippe (215, 220) in Querrichtung zwischen dem Schenkel (115) und dem weiteren Schenkel (125) angeordnet ist.

11. Halterung (15) nach einem vorhergehenden Ansprüche,
- wobei das Befestigungselement (50) wenigstens einen Befestigungsbolzen (85, 90) umfasst,
- wobei der Befestigungsbolzen (85, 90) mit dem Anbindungsabschnitt (120) verbunden ist,
- wobei das Dämpfungselement (45) eine erste Anlagefläche (70) und eine zur ersten Anlagefläche (70) beabstandet angeordnete zweite Anlagefläche (75) aufweist,
- wobei zwischen der ersten Anlagefläche (70) und der zweiten Anlagefläche (75) der Befestigungsbolzen (85, 90) angeordnet ist.

12. Halterung (15) nach Anspruch 11,
- aufweisend ein Eingriffselement (95, 100), wobei der Befestigungsbolzen (85, 90) eine Nut (105, 110) aufweist,
- wobei der Befestigungsbolzen (85, 90) ausgebildet ist, einen Befestigungsabschnitt (20) des Kraftfahrzeugs zu durchgreifen,
- wobei das Eingriffselement (95, 100) auf einer zum Dämpfungselement (45) abgewandten Seite des Befestigungsabschnitts (20) angeordnet ist und in die Nut (105, 110) eingreift, um den Befestigungsbolzen (85, 90) am Befestigungsabschnitt (20) zu sichern,
- wobei ein Abstand zwischen der Nut (105, 110) und der Anlagefläche (70, 75) geringer ist als eine Dicke (d) des Befestigungsabschnitts (20).

13. Halterung (15) nach einem vorgehenden Ansprüche,
- wobei das Befestigungselement (50) zumindest eine gebrochene Kante aufweist,
- wobei vorzugsweise die gebrochene Kante verrundet oder angefast ist.

## Claims

1. Mount (15) for fastening a unit (25), in particular a pump, to a motor vehicle (20)
- having a damping element (45) and a fastening element (50) which is connected to the damping element (45),
- wherein the damping element (45) can be connected to the unit (25),
- wherein the fastening element (50) comprises at least one leg (115, 125) and one attachment section (120) which is connected to the leg (115, 125),
- wherein the leg (115, 125) is designed to stiffen the damping element (45) at least sectionally,
- wherein the attachment section (120) can be connected to the motor vehicle (20),
- **characterized in that** a thickness (s₁, s₂, s₃, s₄) of the leg (115, 125) decreases with increasing distance (a₁, a₂) from the attachment section (120) .

2. Mount (15) according to Claim 1,
- wherein the thickness (s₁, s₂, s₃, s₄) of the leg (115, 125) is, at least sectionally, selected in such a way that an introduction of a force (F₁, F₂) into the leg (115, 125) results in a bending stress (S₁, S₂) being constant over at least a section (155, 171) of the leg (115, 125).

3. Mount (15) according to Claim 1 or 2,
- wherein the fastening element (50) has a further leg (125),
- wherein the further leg (125) is connected to the attachment section (120),
- wherein the attachment section (120) is arranged between the leg (115) and the further leg (125),
- wherein a thickness (s₃, s₄) of the further leg (125) decreases with increasing distance of the further leg (125) from the attachment section (120) .

4. Mount (15) according to Claim 3,
- wherein the attachment section (120), the leg (115) and the further leg (125) are formed in one piece and from the same material, wherein the fastening element (50) comprises at least plastic, in particular a polyamide, as material,
- and/or
- wherein preferably the damping element (45) comprises a further material,
- wherein the further material preferably comprises an elastomer,
- and/or
- wherein the material of the fastening element (50) has a lower elasticity than the further material of the damping element (45),
- and/or wherein the mount (15) is produced by means of an injection-moulding process, in particular a two-component injection-moulding process.

5. Mount (15) according to claim one of the preceding claims,
- wherein the damping element (45) extends annularly about a longitudinal axis (55),
- wherein the leg (115, 125) has a first section (155, 171),
- wherein the first section (155, 171) extends about the longitudinal axis (55) on a circular path.

6. Mount (15) according to Claim 5,
- wherein the leg (115, 125) comprises a second section (160, 172),
- wherein the second section (160, 172) is of substantially planar form,
- wherein the second section (160, 172) is connected to the first section (155, 171) and to the attachment section (120) and is arranged between the first section (155, 171) and the attachment section (120).

7. Mount (15) according to one of the preceding claims,
- wherein the leg (115, 125) has a cutout (175, 180),
- wherein the cutout (175, 180) is preferably of trapezoidal form,
- wherein the cutout (175, 180) has an increasing cross section in the direction of a free end (165, 170) of the leg (115, 125).

8. Mount (15) according to one of the preceding claims,
- wherein the damping element (45) comprises a receptacle (60, 185) with a receptacle section (190, 195, 200),
- wherein the receptacle section (190, 195, 200) is formed in a manner corresponding to the leg (115, 125),
- wherein the receptacle section (190, 195, 200) fully engages around the leg (115, 125).

9. Mount (15) according to one of the preceding claims,
- wherein the attachment section (120) is of planar form,
- wherein the leg (115, 125) is connected at a first side surface (135) to the attachment section (120),
- wherein the fastening element (50) comprises a stiffening rib (215, 220) on the first side surface (135),
- wherein the stiffening rib (215, 220) is connected to the attachment section (120) and preferably extends over at least 80 per cent of a maximum longitudinal extent of the attachment section (120).

10. Mount (15) according to Claim 9,
- wherein the stiffening rib (215, 220) is connected to the second section (160, 172) of the leg (115, 125),
- and/or
- wherein the stiffening rib (215, 220) is arranged between the leg (115) and the further leg (125) in the transverse direction.

11. Mount (15) according to one of the preceding claims,
- wherein the fastening element (50) comprises at least one fastening bolt (85, 90),
- wherein the fastening bolt (85, 90) is connected to the attachment section (120),
- wherein the damping element (45) has a first bearing surface (70) and a second bearing surface (75) which is arranged spaced apart from the first bearing surface (70),
- wherein the fastening bolt (85, 90) is arranged between the first bearing surface (70) and the second bearing surface (75).

12. Mount (15) according to Claim 11,
- having an engagement element (95, 100), wherein the fastening bolt (85, 90) has a groove (105, 110),
- wherein the fastening bolt (85, 90) is designed to engage through a fastening section (20) of the motor vehicle,
- wherein the engagement element (95, 100) is arranged on a side of the fastening section (20) that faces away from the damping element (45), and engages into the groove (105, 110) so as to secure the fastening bolt (85, 90) to the fastening section (20),
- wherein a distance between the groove (105, 110) and the bearing surface (70, 75) is smaller than a thickness (d) of the fastening section (20).

13. Mount (15) according to one of the preceding claims,
- wherein the fastening element (50) has at least one broken edge,
- wherein preferably the broken edge is rounded or bevelled.

## Revendications

1. Dispositif de retenue (15) destiné à fixer une unité (25), en particulier une pompe, à un véhicule automobile (20)
- comportant un élément d'amortissement (45) et un élément de fixation (50) relié à l'élément d'amortissement (45),
- l'élément d'amortissement (45) pouvant être relié à l'unité (25),
- l'élément de fixation (50) comportant au moins une branche (115, 125) et une partie de liaison (120) reliée à la branche (115, 125),
- la branche (115, 125) étant réalisée pour rigidifier l'élément d'amortissement (45) au moins dans certaines parties,
- la partie de liaison (120) pouvant être reliée au véhicule automobile (20),
**caractérisé en ce**
**qu'**une épaisseur (s₁, s₂, s₃, s₄) de la branche (115, 125) diminue au fur et à mesure que la distance (a₁, a₂) à la partie de liaison (120) augmente.

2. Dispositif de retenue (15) selon la revendication 1,
- l'épaisseur (s₁, s₂, s₃, s₄) de la branche (115, 125) étant sélectionnée au moins dans certaines parties de telle sorte qu'en cas d'introduction d'une force (F₁, F₂) dans la branche (115, 125), une contrainte de flexion (S₁, S₂) est constante sur au moins une partie (155, 171) de la branche (115, 125).

3. Dispositif de retenue (15) selon la revendication 1 ou 2,
- l'élément de fixation (50) comprenant une autre branche (125),
- l'autre branche (125) étant reliée à la partie de liaison (120),
- la partie de liaison (120) étant disposée entre la branche (115) et l'autre branche (125),
- une épaisseur (s₃, s₄) de l'autre branche (125) diminuant au fur et à mesure que la distance de l'autre branche (125) à la partie de liaison (120) augmente.

4. Dispositif de retenue (15) selon la revendication 3,
- la partie de liaison (120), la branche (115) et l'autre branche (125) étant réalisées d'une seule pièce et en le même matériau, l'élément de fixation (50) comprenant au moins une matière synthétique, en particulier un polyamide, en tant que matière,
- et/ou
- de préférence l'élément d'amortissement (45) comprenant une autre matière,
- l'autre matière comprenant de préférence un élastomère,
- et/ou
- la matière de l'élément de fixation (50) présentant une élasticité inférieure à celle de l'autre matière de l'élément d'amortissement (45)
- et/ou le dispositif de retenue (15) étant fabriqué par un procédé de moulage par injection, en particulier un procédé de moulage par injection à deux composants.

5. Dispositif de retenue (15) selon la revendication l'une des revendications précédentes,
- l'élément d'amortissement (45) s'étendant de manière annulaire autour d'un axe longitudinal (55),
- la branche (115, 125) comprenant une première partie (155, 171),
- la première partie (155, 171) s'étendant sur une trajectoire circulaire autour de l'axe longitudinal (55).

6. Dispositif de retenue (15) selon la revendication 5,
- la branche (115, 125) comportant une deuxième partie (160, 172),
- la deuxième partie (160, 172) étant réalisée de manière sensiblement plane,
- la deuxième partie (160, 172) étant reliée à la première partie (155, 171) et à la partie de liaison (120) et étant disposée entre la première partie (155, 171) et la partie de liaison (120).

7. Dispositif de retenue (15) selon l'une des revendications précédentes,
- la branche (115, 125) comprenant un évidement (175, 180),
- l'évidement (175, 180) étant réalisé de préférence de manière trapézoïdale,
- l'évidement (175, 180) présentant une section transversale croissante en direction d'une extrémité libre (165, 170) de la branche (115, 125).

8. Dispositif de retenue (15) selon l'une des revendications précédentes,
- l'élément d'amortissement (45) comportant un logement (60, 185) doté d'une partie de logement (190, 195, 200),
- la partie de logement (190, 195, 200) étant réalisée de manière correspondante à la branche (115, 125),
- la partie de logement (190, 195, 200) venant en prise complètement autour de la branche (115, 125).

9. Dispositif de retenue (15) selon l'une des revendications précédentes,
- la partie de liaison (120) étant réalisée de manière plane,
- la branche (115, 125) étant reliée à la partie de liaison (120) au niveau d'une première face latérale (135),
- l'élément de fixation (50) comportant une nervure de rigidification (215, 220) au niveau de la première face latérale (135),
- la nervure de rigidification (215, 220) étant reliée à la partie de liaison (120) et s'étendant de préférence sur au moins 80 pour cent d'une étendue longitudinale maximale de la partie de liaison (120).

10. Dispositif de retenue (15) selon la revendication 9,
- la nervure de rigidification (215, 220) étant reliée à la deuxième partie (160, 172) de la branche (115, 125),
- et/ou
- la nervure de rigidification (215, 220) étant disposée dans la direction transversale entre la branche (115) et l'autre branche (125).

11. Dispositif de retenue (15) selon l'une des revendications précédentes,
- l'élément de fixation (50) comportant au moins un boulon de fixation (85, 90),
- le boulon de fixation (85, 90) étant relié à la partie de liaison (120),
- l'élément d'amortissement (45) comprenant une première surface d'appui (70) et une deuxième surface d'appui (75) disposée de manière espacée de la première surface d'appui (70),
- le boulon de fixation (85, 90) étant disposé entre la première surface d'appui (70) et la deuxième surface d'appui (75).

12. Dispositif de retenue (15) selon la revendication 11,
- comprenant un élément d'entrée en prise (95, 100), le boulon de fixation (85, 90) comprenant une rainure (105, 110),
- le boulon de fixation (85, 90) étant réalisé pour venir en prise à travers une partie de fixation (20) du véhicule automobile,
- l'élément de fixation (95, 100) étant disposé sur un côté de la partie de fixation (20) opposé à l'élément d'amortissement (45) et venant en prise dans la rainure (105, 110), afin d'immobiliser le boulon de fixation (85, 90) sur la partie de fixation (20),
- une distance entre la rainure (105, 110) et la surface d'appui (70, 75) étant inférieure à une épaisseur (d) de la partie de fixation (20).

13. Dispositif de retenue (15) selon l'une des revendications précédentes,
- l'élément de fixation (50) comprenant au moins une arête brisée,
- l'arête brisée étant de préférence arrondie ou chanfreinée.
